# EUROPEAN PATENT APPLICATION

(11) **EP 4 491 474 A1**
(43) Date of publication of application: **15.01.2025**
(21) Application number: 22930151.0
(22) Date of filing: 09.03.2022
(51) Int. Cl.: B60W 10/26, B60K 6/46, B60W 20/13

(54) **HYBRID VEHICLE CONTROL METHOD AND HYBRID VEHICLE CONTROL DEVICE**

(71) Applicant: NISSAN MOTOR CO., LTD., Kanagawa 221-0023 (JP)
(72) Inventor: HAMAMOTO, Takayuki, Atsugi-shi, Kanagawa 243-0123 (JP); ABE, Yutaka, Atsugi-shi, Kanagawa 243-0123 (JP)
(74) Representative: Hoefer & Partner Patentanwälte mbB
(86) International application number: PCT/JP2022/010153
(87) International publication number: WO 2023/170804

(57) **Abstract**

In a hybrid vehicle, the warm-up of a battery (2) is controlled in consideration of the SOC of battery (2) and the temperature of battery (2). That is, in the hybrid vehicle, for example, when the SOC of battery (2) reaches a preset predetermined value and the output of battery (2) is lower than a first threshold value, a first control valve (8) is opened to perform the heat exchange between a first cooling water and a second cooling water by a heat exchanger (6). Consequently, in the hybrid vehicle, the second cooling water in a second cooling path (4) is warmed by the first cooling water in a first cooling path (3) to warm up battery (2), thereby suppressing a decrease in output of battery (2) due to a temperature decrease in battery (2).

## Description

### TECHNICAL FIELD

The present invention relates to a method for controlling a hybrid vehicle and a hybrid vehicle control system.

### BACKGROUND TECHNOLOGY

For example, in a patent document 1, there is disclosed a configuration in which, by opening a bypass valve, a battery pack (battery) is heated (warmed up) via a heat exchanger by cooling water of an internal combustion engine.

In the patent document 1, the opening/closing control of the bypass valve is carried out based on a detection value of a battery pack temperature sensor for detecting the temperature of the battery pack.

However, in such a hybrid car of the patent document 1, when abnormality occurs in the temperature detection of the battery pack (battery), the opening/closing of the bypass valve is incorrectly controlled, and a deterioration in the output of the battery pack might occur due to a decrease in the temperature of the battery pack.

That is, there is room for improvement on the warm-up of a battery using cooling water of an internal combustion engine in order to suppress a deterioration in the output of the battery.

### PRIOR ART REFERENCE(S)

### PATENT DOCUMENT(S)

Patent Document 1: Japanese Patent Application Publication No. 2008-290636

### SUMMARY OF THE INVENTION

In a hybrid vehicle of the present invention, when a battery is in a preset predetermined SOC and the output of the battery is lower than a preset predetermined first threshold value at the time when the internal combustion engine is stopped, the internal combustion engine is started, and, by opening a control valve, the heat exchange between a first refrigerant for cooling the internal combustion engine and a second refrigerant for cooling the battery is carried out.

In the hybrid vehicle of the present invention, the second refrigerant is warmed by the first refrigerant so as to warm up the battery, thereby suppressing a deterioration in the output of the battery due to a decrease in the temperature of the battery.

### BRIEF DESCRIPTION OF THE DRAWINGS

FIG. 1 is an illustrative view schematically showing a cooling system in a hybrid vehicle according to the present invention.
FIG. 2 is a characteristic diagram showing the correlation between the SOC of a battery and the output of the battery.
FIG. 3 is a characteristic diagram showing the correlation between the degree of deterioration of the battery and the cycle number of the input and output of the battery.
FIG. 4 is a timing chart showing an example of a change in the SOC of the battery and the like at the time of the warm-up of the battery.
FIG. 5 is a flow chart showing an example of a control flow at the time of the warm-up of the battery.

### MODE FOR IMPLEMENTING THE INVENTION

In the following, an embodiment of the present invention will be explained in detail based on the drawings.

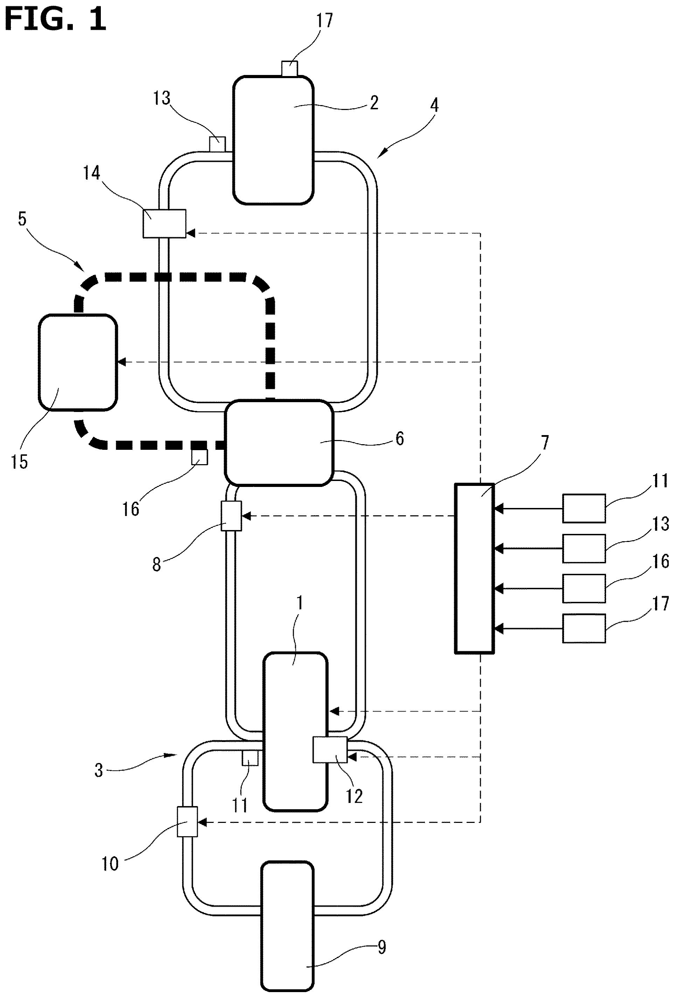

FIG. 1 is an illustrative view schematically showing a cooling system in a hybrid vehicle according to the present invention.

In the hybrid vehicle according to the present invention, an internal combustion engine 1 to be mounted thereon is used for power generation, and an electric motor which is not shown in the drawings drives a drive wheel which is not shown in the drawings. That is, the hybrid vehicle of the present invention is a series hybrid vehicle in which all of the power of internal combustion engine 1 is used for generating electric power. Internal combustion engine 1 is connected to a motor generator for generating power which is not shown in the drawings. The electric power generated by the power generating motor generator is supplied to a battery 2 mounted on the vehicle and the electric motor for driving the drive wheel. The electric motor for driving the drive wheel is driven by the electric power charged in battery 2 or the electric power generated by the power generating motor generator. Battery 2 is one in which the charging and discharging of the electric power can be performed.

The hybrid vehicle includes a first cooling path 3 in which a first cooling water (engine cooling water) as a first refrigerant which is capable of cooling internal combustion engine 1 is circulated, a second cooling path 4 in which a second cooling water (battery cooling water) as a second refrigerant which is capable of cooling battery 2 is circulated, a third cooling path (refrigerant circulating route) 5 in which a third refrigerant that is refrigerant for an air conditioner mounted on the vehicle is circulated, a heat exchanger 6 which is capable of performing heat exchange between the first cooling water, the second cooling water and the third refrigerant, and a control unit 7 as a controller.

First cooling path 3 includes a first control valve 8 as a control valve for controlling the flow rate of cooling water which flows into heat exchanger 6, a radiator 9 for cooling the first cooling water, a second control valve 10 for controlling the flow rate of cooling water which flows into radiator 9, a first temperature sensor 11 for detecting the temperature of the first cooling water, and a first water pump 12 for circulating the first cooling water.

First control valve 8 controls the flow rate of the first cooling water which flows into heat exchanger 6 and serves as a control valve which supplies the first cooling water to heat exchanger 6 in a valve opening state and stops supplying the first cooling water to heat exchanger 6 in a valve closing state.

Second control valve 10 controls the flow rate of the cooling water which flows into radiator 9 and serves as a control valve which supplies the first cooling water to heat exchanger 6 in a valve opening state and stops supplying the first cooling water to heat exchanger 6 in a valve closing state.

The opening/closing control of first control valve 8 and second control valve 10 is performed by commands from control unit 7.

First water pump 12 is an electric pump driven by a command, for example, from control unit 7. In addition, first water pump 12 may be a mechanical pump driven by the rotation of a crankshaft of internal combustion engine 1.

Second cooling path 4 includes a second temperature sensor 13 for detecting the temperature of the second cooling water and a second water pump 14 for circulating the second cooling water.

Second water pump 14 is an electric pump driven by a command sent, for example, from control unit 7.

Third cooling path 5 includes a compressor 15 for compressing the third refrigerant and a third temperature sensor 16 for detecting the temperature of the circulating third refrigerant. Compressor 15 is driven by a command from control unit 7 in accordance, for example, with an operation condition of an air conditioner.

Detection signals of various sensors such as first temperature sensor 11, second temperature sensor 13, third temperature sensor 16 and a battery temperature sensor 17 for detecting the temperature of battery 2 are input to control unit 7. In addition, control unit 7 is configured to control the operation of internal combustion engine 1. Specifically, control unit 7 controls the operation/stoppage of internal combustion engine 1 and the load and engine rotation speed of internal combustion engine 1. In addition, control unit 7 is capable of detecting an SOC (State of Charge) that is the ratio of a remaining charge amount to the charge capacity of battery 2.

The first cooling water exchanges heat with the second cooling water and the third refrigerant via heat exchanger 6 by opening first control valve 8.

The second cooling water exchanges heat with the third refrigerant via heat exchanger 6. That is, the hybrid vehicle is configured such that the second cooling water inside second cooling path 4 is cooled by the third refrigerant inside third cooling path 5.

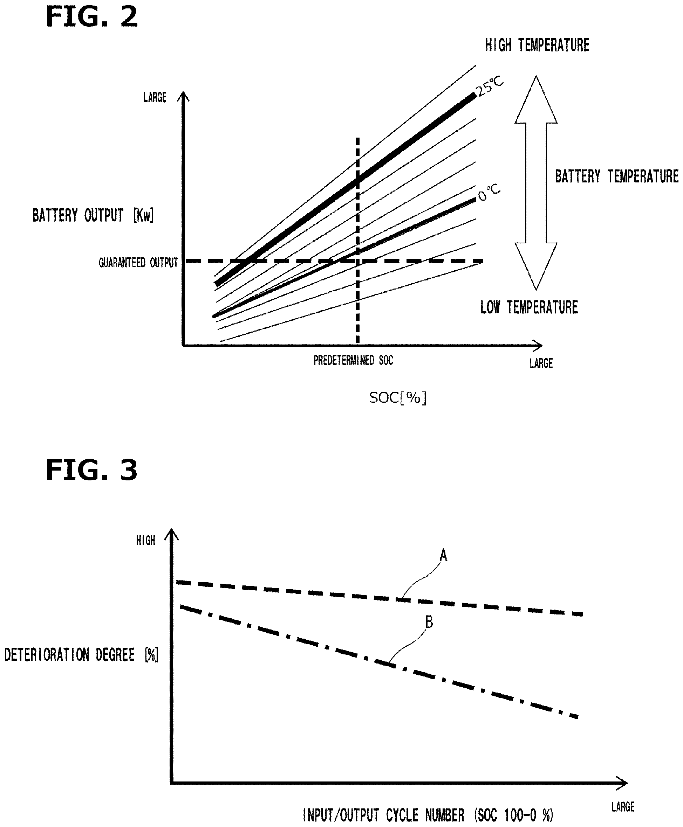

FIG. 2 is a characteristic diagram showing the correlation between the SOC of battery 2 and the output of battery 2. As shown in FIG. 2, under the same temperature, the larger the SOC of battery 2 is, the larger the output of battery 2 is. In addition, under the same SOC, the higher the temperature of battery 2 is, the larger the output of battery 2 is. That is, in battery 2, the higher the SOC is, the higher the output is, and the lower the temperature is, the lower the output is.

Therefore, in battery 2, the lower the temperature becomes, the higher the value of the SOC which satisfies the guaranteed output (minimum guaranteed output) of battery 2 becomes. In the hybrid vehicle, when the output of battery 2 is equal to or higher than the guaranteed output, internal engine 1 is stopped, and EV traveling in which a drive wheel is driven with only electric power from battery 2 by driving an electric motor can be performed.

FIG. 3 is a characteristic diagram showing the correlation between the degree of deterioration of battery 2 and the cycle number of the input and output of battery 2. A characteristic line A shown by a broken line in FIG. 3 indicates a case where the temperature of battery 2 is a standard temperature (for example, 25 °C). A characteristic line B shown by an alternate long and short dash line in FIG. 3 indicates a case where the temperature of battery 2 is high (for example, 45 °C). For example, a state in which battery 2 is new is set as a reference (100%), and it is defined that the degree of deterioration of battery 2 progresses as it becomes small. The cycle number of the input and output of battery 2 is, for example, the number of times that the SOC of battery 2 becomes 0% from 100%, and, in other words, it is the number of times of repetition of charge and discharge.

As shown in FIG. 3, when the temperature of battery 2 is high, the deterioration of battery 2 is accelerated.

Therefore, in the hybrid vehicle, the warm-up of battery 2 is controlled in consideration of the SOC of battery 2 and the temperature of battery 2. That is, in the hybrid vehicle, when the SOC of battery 2 is at a predetermined value and the output of battery 2 is lower than a preset predetermined first threshold value (guaranteed output), the second cooling water is warmed by the first cooling water in first cooling path 3 to warm up battery 2. Specifically, in the hybrid vehicle, when the output of battery 2 is lower than the first threshold value (guaranteed output) at the time when, for example, the SOC of battery 2 reaches a preset predetermined value, first control valve 8 is opened, and the heat exchange between the first cooling water and the second cooling water is carried out by heat exchanger 6.

Accordingly, in the hybrid vehicle, the second cooling water in second cooling path 4 is warmed by the first cooling water in first cooling path 3, and battery 2 can be warmed up, thereby suppressing the lowering of the output of battery 2 due to the lowering of the temperature of battery 2. In the hybrid vehicle, when the output of battery 2 is equal to or higher than the first threshold value, EV traveling performed in a state in which internal combustion engine 1 is stopped is ensured.

In battery 2, when the first cooling water is warmed up and the output (characteristic) of battery 2 is improved, the time until the output of battery 2 reaches a value lower than the first threshold value (guaranteed output) can be prolonged. Consequently, in the hybrid vehicle, EV traveling performed in a state in which internal combustion engine 1 is stopped can be carried out for a long time.

In addition, in the hybrid vehicle, the output (characteristic) of battery 2 at the time of an engine cold condition can be improved, and acceleration performance (at the time of, for example, starting) and traveling performance at the time of hill climbing can be improved (enhanced).

In battery 2, the lower the temperature of battery 2 becomes, the lower the amount of chargeable electric power becomes. Consequently, in the hybrid vehicle, when the temperature of battery 2 is low and the amount of the electric power chargeable to battery 2 is low, for example, by operating friction brake, kinetic energy is converted to heat energy and it is consumed so as to reduce a regeneration amount.

However, in the hybrid vehicle, since the regeneration amount at the time of an extremely low temperature can be increased by the warm-up of battery 2, kinetic energy generated by deceleration can be stably recovered.

In addition, control unit 7 calculates a requested heat amount requested for the warm-up of battery 2 from the temperature of battery 2 and the thermal capacity of battery 2, and controls the rotation speed and the load (operation point) of internal combustion engine 1 at the time of the warm-up of battery 2 according to the requested heat amount. In addition, the requested heat amount is a value in which, for example, the temperature of battery 2 reaches at least the standard temperature.

Consequently, in the hybrid vehicle, by calculating a heat amount requested for the warm-up of battery 2, the temperature of battery 2 can be increased with the minimum fuel, and thereby the fuel consumption of internal combustion engine 1 with the warm-up of battery 2 can be suppressed.

In addition, in the hybrid vehicle, it is possible to suppress excessive temperature rise of battery 2, thereby suppressing the deterioration of battery 2 caused by the temperature rise of battery 2.

Control unit 7 performs heat exchange between the first cooling water and the second cooling water via heat exchanger 6 by opening first control valve 8 according to the temperature of battery 2 and the temperature of the second cooling water, when battery 2 is warmed up.

Specifically, control unit 7 performs the heat exchange between the first cooling water and the second cooling water via heat exchanger 6 by opening first control valve 8 when the temperature of the first cooling water reaches a temperature equal to or higher than a present predetermined first temperature and the temperature of the second cooling water and the temperature of battery 2 reach a temperature equal to or lower than the standard temperature. In other words, control unit 7 controls first control valve 8 so as to start the heat exchange between the first cooling water and the second cooling water after the temperature of the first cooling water increases.

In addition, control unit 7 stops (ends) the heat exchange between the first cooling water and the second cooling water which is performed via heat exchanger 6 at the time of the warm-up of battery 2, when the temperature of the second cooling water and the temperature of battery 2 reach the standard temperature. That is, control unit 7 ends the warm-up of battery 2 by closing first control valve 8, when the temperature of the second cooling water and the temperature of battery 2 reach the standard temperature.

Consequently, in the hybrid vehicle, a deterioration in battery 2 caused by the excessive increasing of the temperature of battery 2 can be suppressed, and thereby the function of battery 2 can be guaranteed.

In the hybrid vehicle, since the heat exchange between the first cooling water and the second cooling water is performed also in taking account of the temperature of the second cooling water, as compared with a case where it is performed only in taking account of one of the values of the temperature of battery 2 and the temperature of the second cooling water, the deterioration of battery 2 can be suppressed.

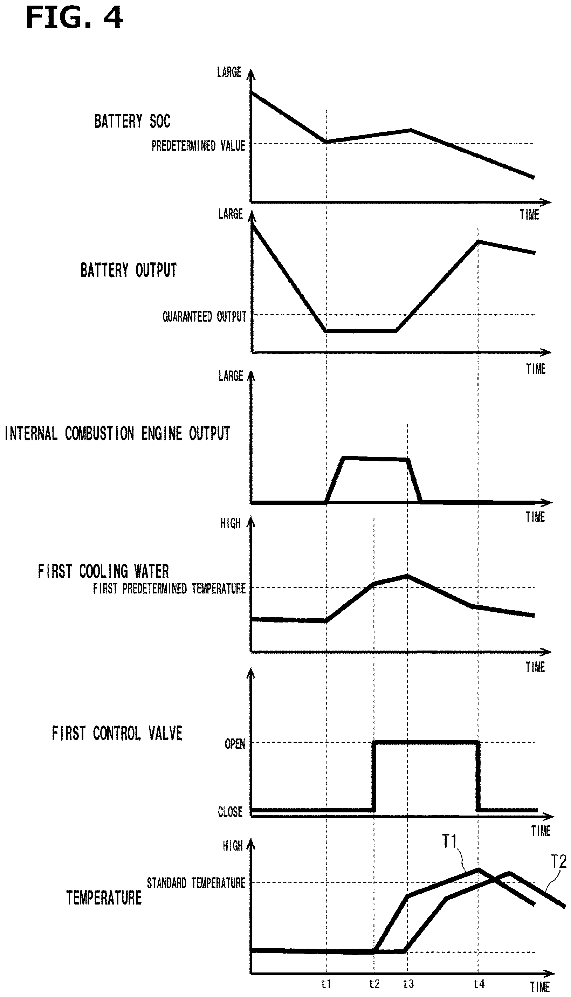

FIG. 4 is a timing chart showing an example of a change in the SOC of battery 2 and the like at the time of the warm-up of battery 2. A characteristic line T1 in FIG. 4 indicates a temperature of the second cooling water. A characteristic line T2 in FIG. 4 indicates a temperature of battery 2.

A time t1 is a timing of the start of internal combustion engine 1. The SOC of battery 2 at time t1 is at a preset predetermined value. In addition, the output of battery 2 at time t1 is lower than the first threshold value. First control valve 8 is kept in a valve closing state, at time t1. The temperature of the first cooling water increases from the timing at time t1 by the start of internal combustion engine 1. In addition, second control valve 10 becomes a valve opening state at time T1.

A time t2 is a timing at which the temperature of the first cooling water reaches a first predetermined temperature and first control valve 8 is opened.

A time t3 is a timing at which internal combustion engine 1 which has been started for the warm-up of battery 2 is stopped. The requested heat amount is determined by the engine rotation speed, the load and the drive time of internal combustion engine 1. That is, time t3 is a timing at which the drive time of internal combustion engine 1 with t1 as a starting point which is determined according to the requested heat amount has elapsed.

A time t4 is a timing at which the temperature of battery 2 reaches the standard temperature and a timing at which first control valve 8 is closed.

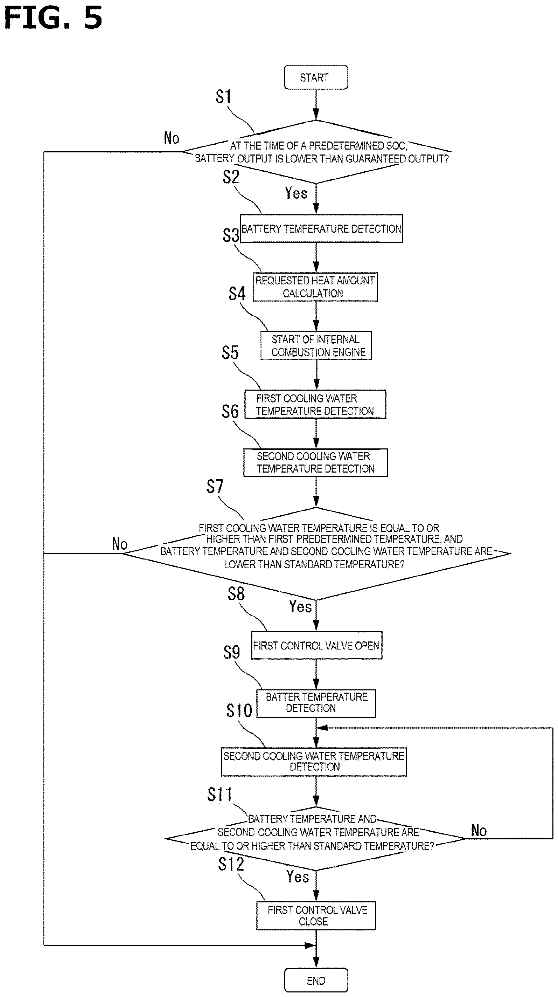

FIG. 5 is a flow chart showing an example of a control flow at the time of the warm-up of battery 2.

In a step S1, it is determined whether or not the output of battery 2 is lower than the first threshold value (guaranteed output) when battery 2 is at a predetermined SOC. When it is determined that the output of battery 2 is lower than the first threshold value when the SOC of battery 2 is at a preset predetermined value in step S1, the step proceeds to a step S2. When it is not determined that the output of battery 2 is lower than the first threshold value when the SOC of battery 2 is at a preset predetermined value in step S1, the routine of this time is ended.

In a step S2, the temperature of battery 2 is detected. In a step S3, the requested heat amount is calculated. In a step S4, internal combustion engine 1 is started. Internal combustion engine 1 is operated at a driving point (engine rotation speed, load) according to the requested heat amount for a driving time according to the requested heat amount. In a step S5, the temperature of the first cooling water is detected. In a step S6, the temperature of the second cooling water is detected.

In a step S7, it is determined whether or not the temperature of the first cooling water is equal to or higher than the first predetermined temperature and the temperature of battery 2 and the temperature of the second cooling water are lower than the standard temperature. In step S7, when it is determined that the temperature of the first cooling water is equal to or higher than the first predetermined temperature and the temperature of battery 2 and the temperature of the second cooling water are lower than the standard temperature, the step proceeds to a step S8. In step S7, when it is not determined that the temperature of the first cooling water is equal to or higher than the first predetermined temperature and the temperature of battery 2 and the temperature of the second cooling water are lower than the standard temperature, the routine of this time is ended.

In step S8, first control valve 8 is opened to start the warm-up of battery 2. In a step S9, the temperature of battery 2 is detected. In a step S10, the temperature of the second cooling water is detected.

In a step S11, it is determined whether or not the temperature of battery 2 and the temperature of the second cooling water are equal to or higher than the standard temperature. In step S11, when it is determined that the temperature of battery 2 and the temperature of the second cooling water are equal to or higher than the standard temperature, the step proceeds to a step S12. In step S11, when it is not determined that the temperature of battery 2 and the temperature of the second cooling water are equal to or higher than the standard temperature, the step proceeds to step S9.

In step S12, first control valve 8 is closed, and then the warm-up of battery 2 is ended.

As the above, although a specific embodiment of the present invention has been explained, the present invention is not limited to the embodiment mentioned above, and various changes might be made to the embodiment without departing from the scope and spirit of the present invention.

For example, control unit 7 may be configured such that, by using the heat capacity of first cooling path 3 and the heat capacity of second cooling path 4 before the opening of first control valve 8, the temperature of battery 2 and a refrigerant equilibrium temperature that is an equilibrium temperature of the first cooling water and the second cooling water when first control valve 8 is opened are estimated (calculated), and when the temperature of the first cooling water reaches a temperature equal to or higher than the preset first predetermined temperature and the refrigerant equilibrium temperature and the temperature of battery 2 become the standard temperature (for example, 25 °C) or lower, the heat exchange between the first cooling water and the second cooling water is performed via heat exchanger 6 at the time of the warm-up of battery 2. That is, control unit 7 may start the warm-up of battery 2 by opening first control valve 8 when the temperature of the first cooling water becomes the first predetermined temperature or higher by the start of internal combustion engine 1 and the refrigerant equilibrium temperature and the temperature of battery 2 become the standard temperature or lower.

In addition, control unit 7 may be configured to stop (end) the heat exchange between the first cooling water and the second cooling water which is performed via heat exchanger 6, when the heat exchange between the first cooling water and the second cooling water via heat exchanger 6 is being performed even if the temperature of battery 2 is higher than the standard temperature and becomes a value obtained by subtracting self-heating temperature (value) of battery 2 from the allowable temperature of battery 2. That is, when the heat exchange between the first cooling water and the second cooling water is being performed via heat exchanger 6 even if the temperature of battery 2 is higher than the standard temperature and becomes a value obtained by subtracting self-heating temperature (value) of battery 2 from the allowable temperature of battery 2, control unit 7 may close first control valve 8.

Accordingly, the hybrid vehicle has a failsafe function for stopping the heat exchange between the first cooling water and the second cooling water which is performed via heat exchanger 6, and thereby the function of battery 2 can be ensured. In addition, the allowable temperature of battery 2 is determined by the type of battery 2.

For example, the temperature of battery 2 is not directly detected by battery temperature sensor 17 but may be estimated based, for example, on detection signals of existing sensors, such as second temperature sensor 13, and a driving history.

Second cooling path 4 may have a radiator for cooling battery cooling water in case where the battery cooling water is not cooled by the heat exchange with the refrigerant inside third cooling path 5.

In addition, the hybrid vehicle mentioned above may be configured such that second control valve 10 is formed to serve as a mechanical thermostat and first cooling path 3 has a bypass path for bypassing radiator 9. In this case, in this hybrid vehicle, at the time of the warm-up of battery 2, engine cooling water can be circulated inside first cooling path 3 while bypassing radiator 9 when the temperature of the engine cooling water is low, so as to quickly increase the temperature of the engine cooling water.

The embodiment mentioned above relates to a hybrid vehicle control method and a hybrid vehicle control system.

## Claims

1. A method for controlling a hybrid vehicle, wherein the hybrid vehicle comprises: an internal combustion engine for power generation; a first cooling path in which a first refrigerant which is capable of cooling the internal combustion engine is circulated; a battery for charging and discharging electric power; a second cooling path in which a second refrigerant which is capable of cooling the battery is circulated; a heat exchanger for performing heat exchange between the first refrigerant and the second refrigerant; and a control valve provided in the first cooling path, and configured to supply the first refrigerant to the heat exchanger in a valve opening state and to stop supplying the first refrigerant to the heat exchanger in a valve closing state, the hybrid vehicle control method comprising:
starting the internal combustion engine and opening the control valve to perform the heat exchange between the first refrigerant and the second refrigerant when the battery reaches at a preset predetermined SOC and an output of the battery is lower than a preset predetermined first threshold value, when the internal combustion engine has been stopped.

2. The method for controlling the hybrid vehicle according to claim 1, wherein a requested heat amount requested for warm-up of the battery is calculated from a temperature of the battery and a heat capacity of the battery, and
wherein a rotation speed and a load of the internal combustion engine are controlled according to the requested heat amount.

3. The method for controlling the hybrid vehicle according to claim 1 or 2, wherein the control valve (8) is opened and closed according to the temperature of the battery (2) and a temperature of the second refrigerant, so as to perform the heat exchange between the first refrigerant and the second refrigerant.

4. The method for controlling the hybrid vehicle according to claim 3, wherein, by using a heat capacity of the first cooling path and a heat capacity of the second cooling path before the opening of the control valve, an equilibrium temperature between the first refrigerant and the second refrigerant and the temperature of the battery are estimated, and when the equilibrium temperature and the temperature of the battery reach a predetermined standard temperature or lower, the heat exchange between the first refrigerant and the second refrigerant is performed.

5. The method for controlling the hybrid vehicle according to claim 4, wherein when the temperature of the second refrigerant and the temperature of the battery reach the predetermined standard temperature, the heat exchange between the first refrigerant and the second refrigerant is stopped.

6. The method for controlling the hybrid vehicle according to claim 5, wherein when the heat exchange between the first refrigerant and the second refrigerant is being performed even if the temperature of the battery is higher than the standard temperature and becomes a value obtained by subtracting a self-heating temperature of the battery from an allowable temperature of the battery, the heat exchange between the first refrigerant and the second refrigerant is stopped.

7. A hybrid vehicle control system, comprising:
an internal combustion engine for power generation;
a first cooling path in which a first refrigerant which is capable of cooling the internal combustion engine is circulated;
a battery for charging and discharging electric power;
a second cooling path in which a second refrigerant which is capable of cooling the battery is circulated;
a heat exchanger for performing heat exchange between the first refrigerant and the second refrigerant;
a control valve provided in the first cooling path, and configured to supply the first refrigerant to the heat exchanger in a valve opening state and to stop supplying the first refrigerant to the heat exchanger in a valve closing state; and
a controller configured to start the internal combustion engine and open the control valve to perform the heat exchange between the first refrigerant and the second refrigerant when the battery reaches at a preset predetermined SOC and an output of the battery is lower than a preset predetermined first threshold value, when the internal combustion engine has been stopped.
